# EUROPEAN PATENT APPLICATION

(11) **EP 3 974 973 A1**
(43) Date of publication of application: **30.03.2022**
(21) Application number: 20810430.7
(22) Date of filing: 20.04.2020
(51) Int. Cl.: G06F 9/455

(54) **VIRTUAL MACHINE BACKUP METHOD AND DEVICE BASED ON CLOUD PLATFORM DATA CENTER**

(30) Priority: 20.05.2019 CN 201910417508
(71) Applicant: ZTE Corporation, Shenzhen, Guangdong 518057 (CN)
(72) Inventor: ZHANG, Yi, Shenzhen, Guangdong 518057 (CN); YU, Yifang, Shenzhen, Guangdong 518057 (CN); ZHAO, Pei, Shenzhen, Guangdong 518057 (CN); QI, Chen, Shenzhen, Guangdong 518057 (CN)
(74) Representative: Petraz, Gilberto Luigi
(86) International application number: PCT/CN2020/085588
(87) International publication number: WO 2020/233311

(57) **Abstract**

A virtual machine backup method based on a cloud platform data center, comprising: creating an internal snapshot on the basis of a disk mirror image of a virtual machine of the cloud platform data center; and obtaining disk backup data of the virtual machine on the basis of the internal snapshot. The present invention may support rapid recovery of the virtual machine under various failure scenarios in the cloud platform data center.

## Description

### FIELD OF THE INVENTION

The present disclosure relates to, but not limited to the technical field of computers, and in particular to a virtual machine backup method and apparatus based on a cloud platform data center.

### BACKGROUND OF THE INVENTION

At present, more data centers use a unified cloud platform to deploy various types of service virtual machines, so as to achieve purposes of resource clustering, centralized construction, resource saving, rapid deployment and convenient maintenance. The various types of service virtual machines can operate on a centralized cloud platform data center. In this case, if the cloud platform data center is subjected to a disaster or the virtual machines operating on the cloud platform data center are damaged, recovery of the virtual machines is required so as to recover an interrupted service.

### SUMMARY OF THE INVENTION

Provided in the embodiments of the present disclosure are a virtual machine backup method and apparatus based on a cloud platform data center, which can support that rapid recovery of a virtual machine is enabled under various failure scenes of the cloud platform data center.

In an aspect, provided in one embodiment of the present disclosure is a virtual machine backup method based on a cloud platform data center, comprising: creating an internal snapshot based on a disk mirror image of a virtual machine of the cloud platform data center; and acquiring disk backup data of the virtual machine based on the internal snapshot.

In another aspect, provided in one embodiment of the present disclosure is a virtual machine backup apparatus based on a cloud platform data center, comprising: an internal snapshot creating module, which is configured to create an internal snapshot based on disk mirror image of a virtual machine of the cloud platform data center; and a first backup module, which is configured to acquire disk backup data of the virtual machine based on the internal snapshot.

In a yet aspect, provided in one embodiment of the present disclosure is a computer-readable storage medium that stores a computer program, and the computer program, when executed, implements the above-mentioned virtual machine backup method based on a cloud platform data center.

Other features and advantages of the present disclosure will be described in the following description, and some will become obvious from the description, or understood by implementing the present disclosure. The purpose and other advantages of the present disclosure are realized and obtained by the structures specifically pointed out in the description, the claims and the accompanying drawings.

### BRIEF DESCRIPTION OF THE DRAWINGS

The accompanying drawings are used to provide a further understanding of the technical solutions of the present disclosure and constitute a part of the description, and are used together with the embodiments of the present disclosure to explain the technical solutions of the present disclosure and do not constitute a limitation to the technical solutions of the present disclosure.
Fig. 1 is a schematic diagram of an exemplary architecture of a cloud platform data center;
Fig. 2 is a schematic diagram of a process of performing full backup of a virtual machine of a cloud platform data center by means of an external snapshot;
Fig. 3 is a flowchart of performing full backup of a virtual machine of a cloud platform data center by means of an external snapshot;
Fig. 4 is a schematic diagram of a process of performing incremental backup of a virtual machine of a cloud platform data center by means of an external snapshot;
Fig. 5 is a flowchart of performing incremental backup of a virtual machine of a cloud platform data center by means of an external snapshot;
Fig. 6 is a flowchart of a virtual machine backup method based on a cloud platform data center according to an embodiment of the present disclosure;
Fig. 7 is a schematic diagram of a process of performing full backup and incremental backup of a virtual machine of a cloud platform data center by means of an internal snapshot according to an exemplary embodiment of the present disclosure;
Fig. 8 is a flowchart of performing full backup and incremental backup of a virtual machine of a cloud platform data center by means of an internal snapshot according to an exemplary embodiment of the present disclosure;
Fig. 9 is a schematic diagram of a process of creating an internal snapshot according to an exemplary embodiment of the present disclosure;
Fig. 10 is a schematic diagram of application of a virtual machine backup method based on a cloud platform data center according to an exemplary embodiment of the present disclosure; and
Fig. 11 is a schematic diagram of a virtual machine backup apparatus based on a cloud platform data center according to an embodiment of the present disclosure.

### DETAILED DESCRIPTION OF THE EMBODIMENTS

In order to make the objectives, technical solutions and advantages of the present disclosure clearer, the embodiments of the present disclosure are further illustrated in details below in conjunction with the accompanying drawings. It should be noted that the embodiments in the present disclosure and the features in the embodiments can be combined arbitrarily with each other as long as there is no conflict.

Steps shown in a flowchart of the accompanying drawings may be implemented in a computer system, such as a group of computer-executable instructions. Although the flowchart show a logical sequence, in some cases, steps that have been shown or described may be implemented in a sequence different from this sequence.

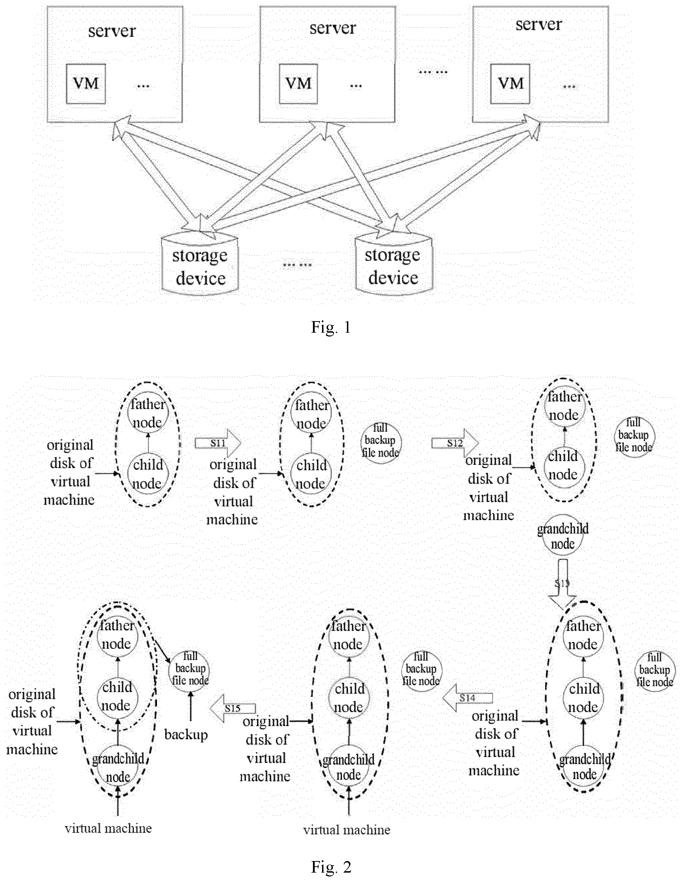

Fig. 1 is a schematic diagram of an exemplary architecture of a cloud platform data center. As shown in Fig. 1, a plurality of virtual machines (VMs) may be deployed in a cloud platform data center according to a cluster of servers. For example, virtual machines are deployed by using a kernel-based virtual machine (KVM) virtualization technology. Herein, one or more virtual machines may be deployed on one server, and a plurality of servers may share a storage resource provided by a storage device. The present disclosure does not limit the architecture and the deployment method of a cloud platform data center. It should be noted that backup of a virtual machine under a KVM virtualization scenario is taken as an example in the present disclosure for description.

At present, for a virtual machine of a cloud platform data center, full backup and incremental backup of disk data at a certain moment of the virtual machine are implemented mostly by means of an external snapshot of a differencing disk mirror image. A process of performing full backup and incremental backup of a virtual machine of a cloud platform data center by means of an external snapshot is illustrated below on the basis of Figs. 2 to 5. Herein, a node represents a physical storage file in which disk data of a virtual machine is located. In the present disclosure, disk backup data of a virtual machine is acquired by using an internal snapshot created on the basis of a disk mirror image of the virtual machine of a cloud platform data center, such that rapid recovery of the virtual machine is supported under various failure scenes of the cloud platform data center, thereby achieving a purpose of disaster tolerance.

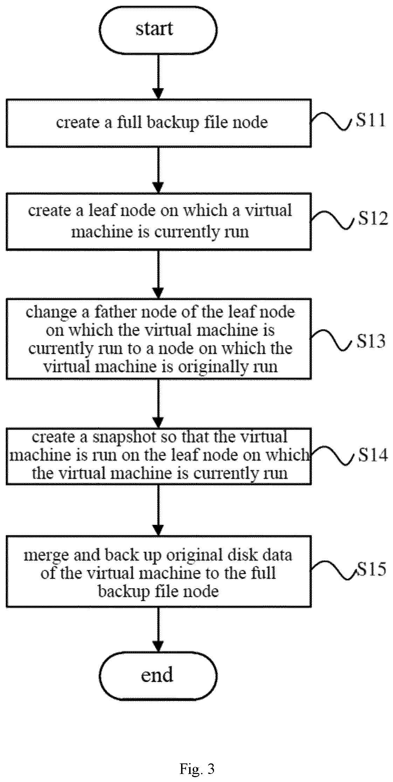

Fig. 2 is a schematic diagram of a process of performing full backup of a virtual machine of a cloud platform data center by means of an external snapshot; and Fig. 3 is a flowchart of performing full backup of a virtual machine of a cloud platform data center by means of an external snapshot. In Figs. 2 and 3, one virtual machine under a KVM virtualization scenario is merely taken as an example for description. In a differencing disk scenario, a plurality of virtual machines may share one father node, each of the virtual machines corresponds to its respective child node, and the child nodes all point towards the father node.

As shown in Figs. 2 and 3, the process of performing full backup of a virtual machine of a cloud platform data center by means of an external snapshot includes the following operations S11 to S15.

At S11, a full backup file node of a virtual machine is created. At this time, the full backup file node is not associated with an original disk of the virtual machine.

At S12, a leaf node (i.e. a grandchild node) on which the virtual machine is currently running is created. At this time, the grandchild node is not associated with the original disk of the virtual machine.

At S13, a father node of the grandchild node is modified to be as a node (i.e. a child node) on which the virtual machine was originally run. At this time, association between the grandchild node and the child node is established.

At S14, a snapshot is created so that the virtual machine is run on the grandchild node.

At S15, data of the original disk (corresponding to a father node and the child node) of the virtual machine is merged and backed up into the full backup file node.

It can be seen therefrom that when full backup is performed by means of an external snapshot of a differencing disk, a chain structure of disk files of the virtual machine needs to be modified, as a result of which the file chain structure of the virtual machine has been transformed.

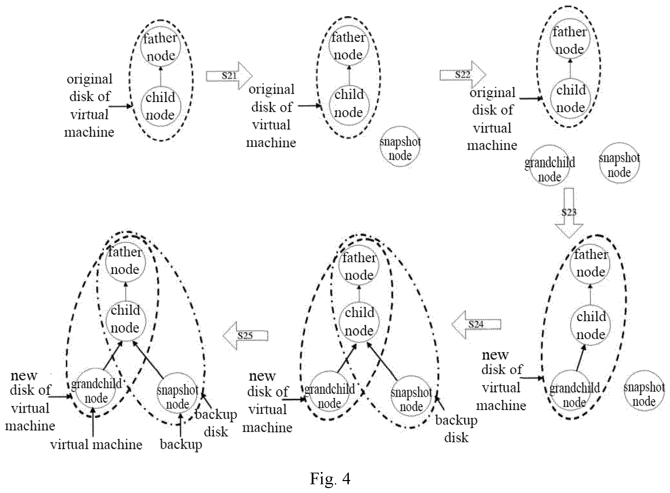

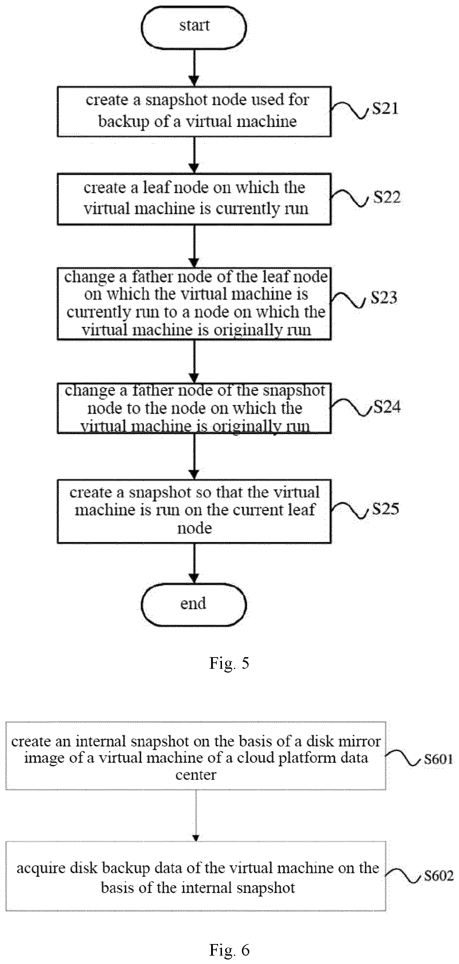

Fig. 4 is a schematic diagram of a process of performing incremental backup of a virtual machine of a cloud platform data center by means of an external snapshot; and Fig. 5 is a flowchart of performing incremental backup of a virtual machine of a cloud platform data center by means of an external snapshot. In Figs. 4 and 5, one virtual machine under a KVM virtualization scenario is merely taken as an example for description.

As shown in Figs. 4 and 5, the process of performing incremental backup of a virtual machine of a cloud platform data center by means of an external snapshot includes the following operations S21 to S 25.

At S21, a snapshot node used for backup of a virtual machine is created. At this time, the snapshot node is not associated with an original disk of the virtual machine.

At S22, a leaf node (i.e. a grandchild node) on which the virtual machine is currently running is created. At this time, the grandchild node is not associated with the original disk of the virtual machine.

At S23, a father node of the grandchild node is modified to be as a node (i.e. a child node) on which the virtual machine was originally run. At this time, association between the grandchild node and the child node is established.

At S24, a father node of the snapshot node used for backup of the virtual machine is modified to be as the node (i.e. the child node) on which the virtual machine was originally run. At this time, association between the snapshot node and the child node is established.

At S25, a snapshot is created so that the virtual machine is run on the grandchild node. At this time, a father node, the child node, and the grandchild node on which the virtual machine is currently running correspond to a new disk of the virtual machine, and the father node, the child node, and the snapshot node correspond to a backup disk of the virtual machine at a time point corresponding to the snapshot node.

Within a period of time after the time point corresponding to the snapshot node, incremental disk data of the virtual machine is stored in the grandchild node on which the virtual machine is currently running. It can be seen therefrom that the process of performing incremental backup by means of an external snapshot uses disk files of the virtual machine themself as a storage container of incremental data, such that coupling between incremental backup data and original disk files of the virtual machine is higher, and thereby operability of the backup for remote disaster tolerance has greater difficulty. Moreover, when incremental backup is performed by means of an external snapshot, a chain structure of disk files of the virtual machine also needs to be modified, as a result of which the file chain structure of the virtual machine has been transformed.

When an external snapshot is created, the snapshot is saved in a single *qcow2* file, data after the time point when the snapshot is created is recorded in a new *qcow2* file, and an original mirror file becomes a backing file of the new *qcow2* file, i.e. a father node (read-only). After a plurality of snapshots are created, these files form a file chain.

Provided in the embodiments of the present disclosure are a virtual machine backup method and apparatus based on a cloud platform data center. Under various failure scenes of a virtualized cloud platform data center (for example, a virtual machine is damaged and the like), backup for disaster tolerance is performed by means of an internal snapshot created on the basis of a disk mirror image of the virtual machine, thereby supporting rapid recovery of the virtual machine under the various failure scenes of the cloud platform data center, and achieving the purpose of disaster tolerance. Moreover, in the embodiments of the present disclosure, backup of a virtual machine is implemented based on an internal snapshot, such that a chain structure of disk files of the original virtual machine can be unchanged, a relatively stable structure of the original virtual machine is preserved, and data exported for the backup is independent of a disk mirror image of the virtual machine so as to facilitate exporting, thereby enabling disaster tolerance.

Fig. 6 is a flowchart of a virtual machine backup method based on a cloud platform data center provided by an embodiment of the present disclosure. As shown in Fig. 6, the virtual machine backup method provided by the embodiment includes steps S601 to S602.

S601, creating an internal snapshot based on a disk mirror image of a virtual machine of a cloud platform data center; and
S602, acquiring disk backup data of the virtual machine based on the internal snapshot.

In the embodiment of the present disclosure, for a virtual machine under a KVM virtualization scenario, through creation of an internal snapshot, the snapshot and subsequent variations may all be saved in an original *qcow2* file (for example, equivalent to the child node in Figs. 2 and 4, which may be a file node in a *qcow2* format).

In an exemplary embodiment, the step S602 may include at least one of the following:
acquiring, based on any one internal snapshot, full disk backup data of a virtual machine at a time point corresponding to the internal snapshot; and
acquiring, based on any two internal snapshots, incremental disk backup data of the virtual machine between time points respectively corresponding to the two internal snapshots.

In this exemplary embodiment, different snapshot points (i.e., time points corresponding to the snapshots) may be set inside a disk of the virtual machine, and corresponding full disk backup data and incremental disk backup data between any two snapshot points are acquired by using the snapshot points, respectively, such that full backup and incremental backup of disk data of the virtual machine of a cloud platform data center are enabled. Moreover, the disk data of the virtual machine is backed up on the cloud platform data center, such that it can be supported that the virtual machine is recovered to a state at a certain normal-operation moment by means of the backed-up disk data when an irreparable failure occurs at the virtual machine.

In an exemplary embodiment, after the step S602, the method of this embodiment may further includes: exporting the disk backup data to at least one of the following: a storage device outside the cloud platform data center in which the virtual machine is located, and a remote cloud platform data center.

In this exemplary embodiment, the disk backup data is exported to a storage device outside a cloud platform data center, such that it can be supported that corresponding disk backup data is fetched back from the external storage device upon a failure of the virtual machine due to a storage device inside the cloud platform data center being damaged, thereby performing recovery of the virtual machine. The disk backup data is exported to a remote cloud platform data center, such that it can be supported that the virtual machine is recovered at the remote cloud platform data center so as to continue operating when a local cloud platform data center is subjected to a disaster and is damaged.

In one exemplary embodiment, the method of the embodiment may further include at least one of the following:
backing up management data of the virtual machine at a cloud platform data center in which the virtual machine is located; and
backing up management data of the virtual machine at a remote cloud platform data center.

The management data of the virtual machine herein may include specification parameters of the virtual machine, such as a name of the virtual machine, the number of cores of a CPU, a size of a memory, configuration of a video card, etc. The management data of the virtual machine may be stored by a management device of the cloud platform data center. A physical host (for example, a server) inside the cloud platform data center may generate a virtual machine configuration file according to the management data of the virtual machine, so as to activate or reconstruct the corresponding virtual machine based on the virtual machine configuration file.

In the exemplary embodiment, it can be supported that the operation of the virtual machine is recovered under various failure scenes of the cloud platform data center based on the backup management data of the virtual machine.

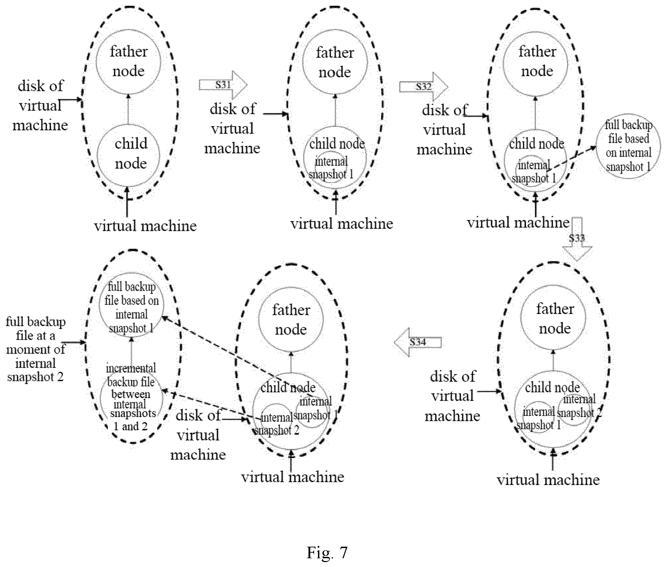

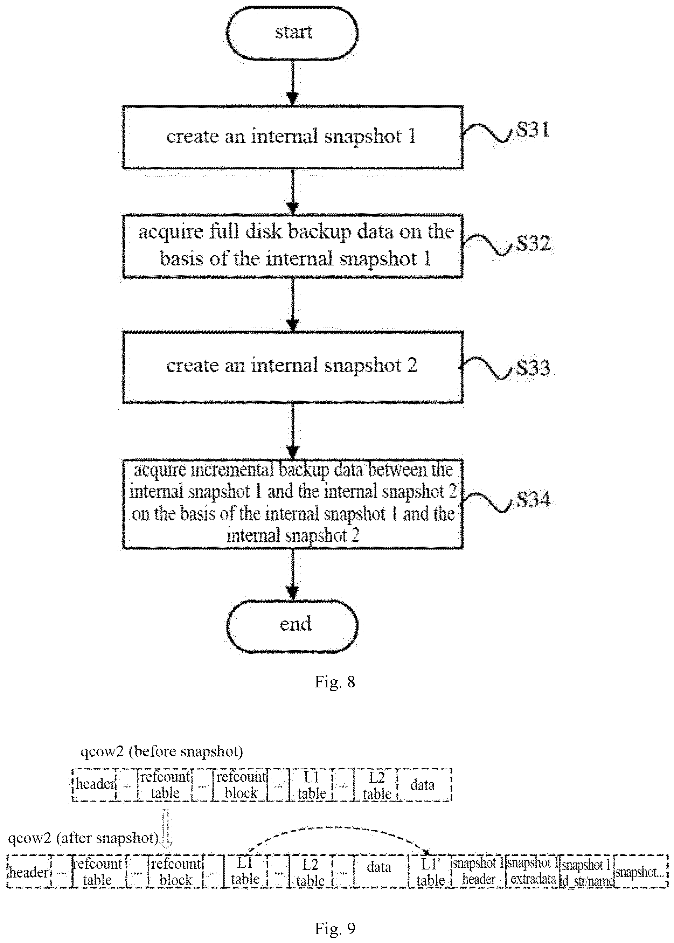

Fig. 7 is a schematic diagram of a process of performing full backup and incremental backup of a virtual machine of a cloud platform data center by means of an internal snapshot according to an exemplary embodiment of the present disclosure; and Fig. 8 is a flowchart of performing full backup and incremental backup of a virtual machine of a cloud platform data center by means of an internal snapshot according to an exemplary embodiment of the present disclosure. In Figs. 7 and 8, one virtual machine under a KVM virtualization scenario is merely taken as an example for description, and a node represents a physical storage file (a *qcow2* file) in which the disk data of the virtual machine is located.

The *qcow2* file herein may manage data by using an L1 table, an L2 table and a cluster table. Each entry in the cluster table stores data, each entry in the L2 table stores an address of the cluster, and each entry in the L1 table stores an initial address of the L2 table.

As shown in Figs. 7 and 8, the process of performing full backup and incremental backup of a virtual machine of a cloud platform data center by means of an internal snapshot as provided in the embodiment includes the following operations S31 to S34.

At S31, an internal snapshot 1 is created on the basis of a differencing disk mirror image of a virtual machine.

As shown in Fig. 9, a process of creating the internal snapshot herein is as following I to VI.
I. A new cluster is applied for, and an old L1 table is copied. It should be noted that copying shown in Fig. 9 makes an L1' table save the content of the old L1 table.
II. An offset value of an L2 table is modified in the L1 table, where after a snapshot is taken, copy on write (cow) is performed using a new L2 table and the old L2 table is not modified any longer.
III. A data offset value is modified in the L2 table, where after the snapshot is taken, copy on write is performed using a new cluster, and an old data cluster is not modified any longer.
IV. All refcount values that have been allocated to clusters are updated, that is, refcount values of the old cluster all plus 1.
V. N continuous clusters are newly allocated to be written collectively with all snapshot information, where the snapshot information includes a header, extra data, an id and a name. It should be noted that information of a plurality of snapshots is saved in the continuous clusters.
VI. A new snapshot offset address is updated into a header of the *qcow2* file, thereby facilitating to address all snapshots.

At S32, full disk backup data of the virtual machine at a time point corresponding to an internal snapshot 1 is acquired based on the internal snapshot 1.

Herein, an address space in which data is originally stored at an original snapshot moment may be acquired by searching the original L1 table (for example, the L1' table in Fig. 9), and corresponding disk data is acquired then.

At S33, an internal snapshot 2 is created on the basis of a differencing disk mirror image of the virtual machine. For the process of creating the internal snapshot 2, reference can be made to Fig. 9, and no further description will be given here.

At S34, incremental disk backup data between the internal snapshot 2 and the internal snapshot 1 (i.e. incremental disk backup data of the virtual machine between a time point corresponding to the internal snapshot 2 and the time point corresponding to the internal snapshot 1) is acquired based on the internal snapshot 1 and the internal snapshot 2.

Herein, an L1 table related to the time point corresponding to the internal snapshot 1 may be acquired according to the internal snapshot 1, such that an address space of storage data at the time point corresponding to the internal snapshot 1 is acquired, and incremental data between the internal snapshot 2 and the internal snapshot 1 may then be acquired by extracting the data in the address space. This is because that once the internal snapshot 2 is established, data in a storage data space corresponding to the internal snapshot 1 will not be modified any longer, and new data is written into an address space of storage data corresponding to an L1 table corresponding to the internal snapshot 2.

In the exemplary embodiment, based on any one internal snapshot, full disk backup data at a time point corresponding to the internal snapshot can be acquired; and based on any two internal snapshots, incremental disk backup data between time points corresponding to the two internal snapshots can be acquired.

Therefore, according to the comparison between Figs. 2 to 5 and Figs. 7 to 8, in the exemplary embodiment, there is no need to transform a chain structure of disk files of the original virtual machine for an operation of performing full backup and incremental backup on disk data of the virtual machine. Moreover, full disk backup data and incremental disk backup data of the virtual machine both exist directly independently of a disk mirror image file that constructs the virtual machine, thereby facilitating exporting of the disk backup data.

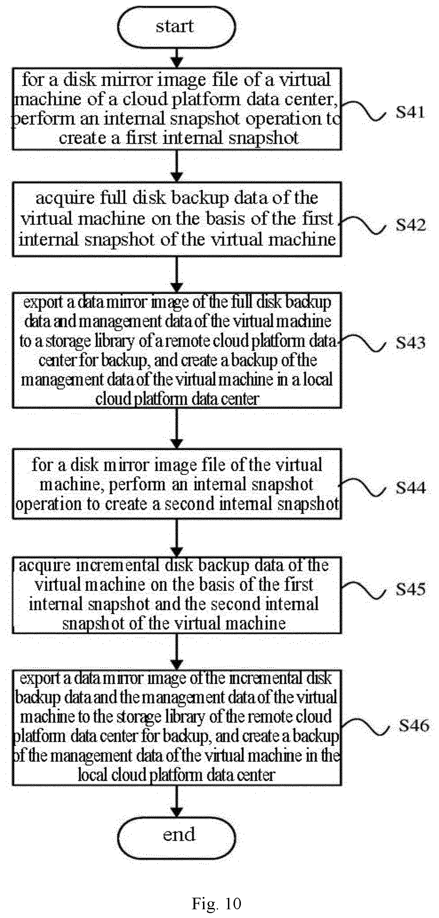

Fig. 10 is a schematic application diagram of a virtual machine backup method provided by an embodiment of the present disclosure. The application scene of the embodiment is a virtualized cloud platform environment of a large-scale data center. As shown in Fig. 10, the virtual machine backup method provided by the exemplary embodiment includes S41 to S46.

S41, performing an internal snapshot operation with respect to a disk mirror image file of a virtual machine of a cloud platform data center to create a first internal snapshot;

S42, acquiring full disk backup data of the virtual machine based on the first internal snapshot of the virtual machine;

S43, exporting a data mirror image of the full disk backup data and management data of the virtual machine to a storage library of a remote cloud platform data center for backup, and creating a backup of the management data of the virtual machine in the local cloud platform data center;

S44, performing an internal snapshot operation with respect to the disk mirror image file of the virtual machine to create a second internal snapshot;

S45, acquiring incremental disk backup data of the virtual machine with respect to the first internal snapshot and the second internal snapshot of the virtual machine; and

S46, exporting a data mirror image of the incremental disk backup data and management data of the virtual machine to the storage library of the remote cloud platform data center for backup, and creating a backup of the management data of the virtual machine in the local cloud platform data center.

It should be noted that, in practical applications, execution of the steps S44 to S46 may be periodically triggered according to demands, that is, the incremental disk backup data is periodically acquired and exported. or alternatively, execution of the steps S44 to S46 may be manually triggered, that is, the incremental disk backup data may be acquired at a preset time point and exported. However, the present disclosure does not limit on this matter.

In the exemplary embodiment, after disk backup data and backup of the management data of the virtual machine have been ready, recovery of the virtual machine can be performed upon encountering the following scenes: when the virtual machine of the local cloud platform data center is abnormal, the virtual machine can be recovered by using the local disk backup data and the management data backed up in the local cloud platform data center; and when the local cloud platform data center is subjected to a disaster and is damage, the virtual machine can be recovered to a remote cloud platform data center by using the disk backup data and the management data of the virtual machine which have exported to the remote cloud platform data center.

The embodiments of the present disclosure can support disaster tolerance backup of a service virtual machine in a cloud platform data center. Full backup and incremental backup of the virtual machine are performed based on internal disk snapshots, such that full backup and incremental backup of disk mirror image data of the virtual machine are enabled without transforming an original chain structure of disk files of the virtual machine. In this way, operation complexity of remote disaster tolerance backup can be greatly reduced, and an impact on the original virtual machine is also greatly reduced.

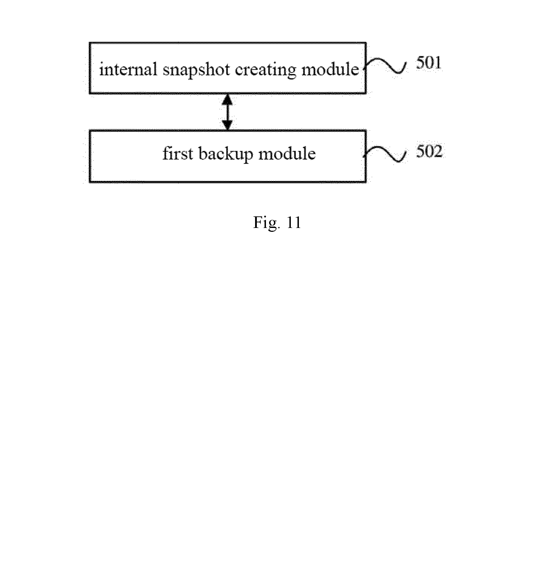

Fig. 11 is a schematic diagram of a virtual machine backup apparatus based on a cloud platform data center provided by an embodiment of the present disclosure. As shown in Fig. 11, the virtual machine backup apparatus provided by the embodiment may include: an internal snapshot creating module 501, which is configured to create an internal snapshot on the basis of a disk mirror image of a virtual machine of a cloud platform data center; and a first backup module 502, which is configured to acquire disk backup data of the virtual machine based on the internal snapshot.

In an exemplary embodiment, the first backup module 502 may be configured to acquire the disk backup data of the virtual machine by at least one of the following approaches: acquiring, based on any one internal snapshot, full disk backup data of the virtual machine at a time point corresponding to the internal snapshot; and acquiring, based on any two internal snapshots, incremental disk backup data of the virtual machine between time points respectively corresponding to the two internal snapshots.

In an exemplary embodiment, on the basis of the virtual machine backup apparatus as shown in Fig. 11, the apparatus of this embodiment may further include: an exporting module, which is configured to export, after the first backup module acquires the disk backup data of the virtual machine, the disk backup data to at least one of the following: a storage device outside the cloud platform data center in which the virtual machine is located, and a remote cloud platform data center.

In an exemplary embodiment, on the basis of the virtual machine backup apparatus as shown in Fig. 11, the apparatus of this embodiment may further include: a second backup module, which is configured to execute at least one of the following: backing up management data of the virtual machine in the cloud platform data center in which the virtual machine is located; and backing up the management data of the virtual machine in a remote cloud platform data center.

For the relevant explanation on the apparatus provided by the embodiment, reference can be made to the descriptions in the above method embodiments, and no further description will be given here.

Furthermore, the embodiments of the present disclosure further provide a computer-readable storage medium that stores a computer program, and the computer program, when executed, implements the above-mentioned virtual machine backup method, such as the steps as shown in Fig. 6, 8 or 10.

It can be understood by those of ordinary skill in the art that all or some of the steps in the method disclosed above, a system, and a function module/unit in an apparatus can be embodied as software, firmware, hardware and a suitable combination thereof. In the hardware implementation, the division of the function modules/units mentioned in the above description does not necessarily correspond to the division of physical assemblies. For example, one physical assembly can have a plurality of functions, or one function or step can be executed by several physical assemblies in cooperation. Some assemblies or all the assemblies can be embodied as software that is executed by a processor, such as a digital signal processor or a microprocessor, or be embodied as hardware, or be embodied as an integrated circuit, such as an application specific integrated circuit. Such software can be distributed on a computer-readable storage medium, and the computer-readable storage medium can comprise a computer storage medium (or a non-transitory medium) and a communication medium (or a transitory medium). As is known to one of ordinary skill in the art, the term, computer storage medium, comprises volatile and non-volatile, removable and non-removable media implemented in any method or technology for storing information such as computer-readable instructions, data structures, program modules, or other data. The computer storage medium comprises but is not limited to an RAM, an ROM, an EEPROM, a flash memory or other storage techniques, a CD-ROM, a digital versatile disc (DVD) or other optical disc memory, a cassette tape, tape or disc memory or other magnetic storage, or any other medium that can be used to store desired information and that can be accessed by a computer. In addition, it is well known to those of ordinary skill in the art that a communication medium generally contains computer-readable instructions, data structures, program modules or other data in a modulated data signal such as a carrier or other transmission mechanisms, and can comprise any information transfer medium.

## Claims

1. A virtual machine backup method based on a cloud platform data center, **characterized in that**, the method comprises:
creating an internal snapshot based on a disk mirror image of a virtual machine of the cloud platform data center; and
acquiring disk backup data of the virtual machine based on the internal snapshot.

2. The method of claim 1, **characterized in that**, acquiring disk backup data of the virtual machine based on the internal snapshot comprises at least one of steps of:
acquiring, based on any one internal snapshot, full disk backup data of the virtual machine at a time point corresponding to the internal snapshot; and
acquiring, based on any two internal snapshots, incremental disk backup data of the virtual machine between time points respectively corresponding to the two internal snapshots.

3. The method of claim 1, **characterized in that**, after acquiring disk backup data of the virtual machine based on the internal snapshot, the method further comprises: exporting the disk backup data to at least one of: a storage device outside the cloud platform data center in which the virtual machine is located, and a remote cloud platform data center.

4. The method of any one of claims 1 to 3, **characterized in that**, the method further comprises at least one of steps of:
backing up management data of the virtual machine at the cloud platform data center in which the virtual machine is located; and
backing up management data of the virtual machine at a remote cloud platform data center.

5. The method of claim 1, **characterized in that**, a disk mirror image of the virtual machine is a differencing disk mirror image.

6. A virtual machine backup apparatus based on a cloud platform data center, **characterized in that**, the apparatus comprises:
an internal snapshot creating module, configured to create an internal snapshot based on a disk mirror image of a virtual machine of the cloud platform data center; and
a first backup module, configured to acquire disk backup data of the virtual machine based on the internal snapshot.

7. The apparatus of claim 6, **characterized in that**, the first backup module is configured to the acquire disk backup data of the virtual machine based on the internal snapshot by at least one of approaches of:
acquiring, based on any one internal snapshot, full disk backup data of the virtual machine at a time point corresponding to the internal snapshot; and
acquiring, based on any two internal snapshots, incremental disk backup data of the virtual machine between time points respectively corresponding to the two internal snapshots.

8. The apparatus of claim 6, **characterized in that**, the apparatus further comprises: an exporting module, configured to export, after the first backup module acquires the disk backup data of the virtual machine, the disk backup data to at least one of: a storage device outside the cloud platform data center in which the virtual machine is located, and a remote cloud platform data center.

9. The apparatus of any one of claims 6 to 8, **characterized in that**, the apparatus further comprises: a second backup module, configured to execute at least one of:
backing up management data of the virtual machine at the cloud platform data center in which the virtual machine is located; and
backing up management data of the virtual machine at a remote cloud platform data center.

10. A computer-readable storage medium, **characterized in that**, the computer-readable storage medium stores a computer program which, when executed by a processor, implements the steps of the virtual machine backup method according to any one of claims 1 to 5.
